# EUROPÄISCHE PATENTANMELDUNG

(11) **EP 2 206 992 A2**
(43) Veröffentlichungstag der Anmeldung: **14.07.2010**
(21) Anmeldenummer: 09401046.9
(22) Anmeldetag: 04.12.2009
(51) Int. Cl.: F24J 2/52

(54) **Antirutsch-Stützvorrichtung**

(30) Priorität: 23.12.2008 IT PD20080379
(71) Anmelder: fischerwerke GmbH & Co. KG, 72178 Waldachtal (DE)
(72) Erfinder: Scarabello, Maurizio, 35127 Padova (IT); Faedda, Francesco, 35020 Ponte San Nicolo Padova (IT)

(57) **Zusammenfassung**

Die vorliegende Erfindung betrifft eine Antirutsch-Stützvorrichtung (10) für Sonnenkollektorplatten und dergleichen, die mindestens ein längliches Modul (11) umfasst, das so geformt ist, dass es biege- und torsionsbeständig ist, und mit Verbindungsmitteln (12) zum festen Verbinden mit weiteren Modulen (11) und mit Halteelementen (13) zum Halten einer Sonnenkollektorplatte (14) ausgestattet ist. Während des Gebrauchs weist die Antirutsch-Stützvorrichtung (10) ein Modul (11) auf, das direkt oder über mindestens ein weiteres Modul (11) fest mit den Halteelementen (13) verbunden ist und gegen die Sonnenkollektorplatte (14) stößt, um zu verhindern, dass diese von den Halteelementen (13) rutscht.

## Beschreibung

Die vorliegende Erfindung betrifft eine Antirutsch-Stützvorrichtung für Sonnenkollektorplatten und dergleichen.

Die Installation von Sonnenkollektorplatten auf Gebäudedächern ist heute weit verbreitet.

Die Sonnenkollektorplatten werden auf Halterungen befestigt, die dazu geeignet sind, die Sonnenkollektorplatten zu tragen. Die Halterungen sind ihrerseits auf dem Dach des Gebäudes befestigt.

Um den Einfall der Sonneneinstrahlung auf die Sonnenkollektorplatten zu optimieren, werden die Halterungen zur Aufnahme der Sonnenkollektorplatten so vorbereitet, dass sie die Sonnenkollektorplatten mit einer vorgegebenen Neigung zu einer horizontalen Ebene stützen. Dies bedeutet, dass der Installateur das Rutschen der aufgelegten und noch nicht auf ihrer Halterung befestigten Sonnenkollektorplatte verhindern muss.

Um diese Anforderung zu erfüllen, sind heute Bügel bekannt, die an den Halterungen befestigt werden und die Sonnenkollektorplatte vor deren Befestigung abstützen.

Diese Bügel sind mit einem Stab versehen, der mit einem hakenförmigen Ende ausgestattet ist. Sie werden so an den Halterungen befestigt, dass sich das hakenförmige Ende unterhalb der Installationsposition der Sonnenkollektorplatte befindet.

Die Sonnenkollektorplatte ist also so auf die Halterung aufgelegt, dass ihr unterer Rand sich an den Bügel hakt, so dass dieser die Sonnenkollektorplatte auf der Halterung hält, an der sie befestigt wird.

Diese Bügel, die aus Metall bestehen, sind Einwegbügel, das heißt, sie bleiben an der Halterung befestigt, nachdem die Sonnenkollektorplatte dort befestigt worden ist, was einen Nachteil hinsichtlich der Wirtschaftlichkeit darstellt.

Die Aufgabe der vorliegenden Erfindung besteht darin, eine Antirutsch-Stützvorrichtung bereitzustellen, die ein wirksames Festhalten der Sonnenkollektorplatte auf ihrer Halterung zumindest bis zu ihrer Befestigung ermöglicht.

Im Rahmen dieser Aufgabe besteht ein Ziel der Erfindung darin, ein bequemes Einstellen der Halteposition der Sonnenkollektorplatte auf ihrer Halterung zu ermöglichen.

Ein weiteres Ziel der Erfindung besteht darin, es zu ermöglichen, das Positionieren der Sonnenkollektorplatte auf ihrer Halterung einfach und schnell vorzubereiten.

Ein letztes Ziel der Erfindung ist es, eine Antirutsch-Stützvorrichtung mit einfacher Struktur bereitzustellen, die kostengünstig hergestellt und einfach angewendet werden kann.

Diese Aufgabe wird gelöst durch eine Antirutsch-Stützeinrichtung für Sonnenkollektorplatten und dergleichen, die dadurch gekennzeichnet ist, dass sie mindestens ein längliches Modul umfasst, das so geformt ist, dass es biege- und torsionsbeständig ist, und mit Mitteln zum festen Verbinden mit weiteren Modulen dieser Art und mit Halteelementen zum Halten einer Sonnenkollektorplatte ausgestattet ist, wobei das Modul der Antirutsch-Stützvorrichtung beim Gebrauch direkt oder über mindestens ein weiteres Modul fest mit den Halteelementen verbunden ist und gegen die Sonnenkollektorplatte stößt, um zu verhindern, dass diese von den Halteelementen rutscht.

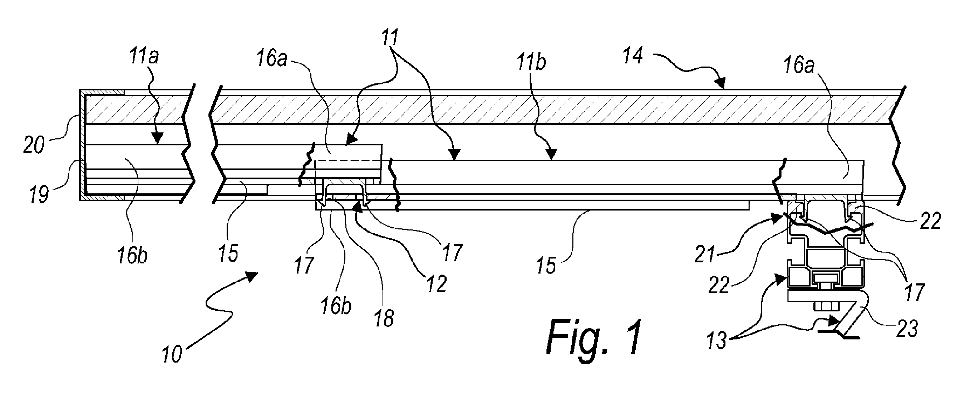

Weitere Eigenschaften und Vorteile der Erfindung ergeben sich größtenteils aus der Beschreibung einer bevorzugten, jedoch nicht ausschließlichen Ausführungsform der Antirutsch-Stützvorrichtung gemäß der Erfindung, die als nicht einschränkendes Beispiel in den beiliegenden Zeichnungen dargestellt ist, in denen
- Figur 1: eine teilweise geschnittene seitliche Ansicht einer Antirutsch-Stützvorrichtung gemäß der Erfindung zeigt;

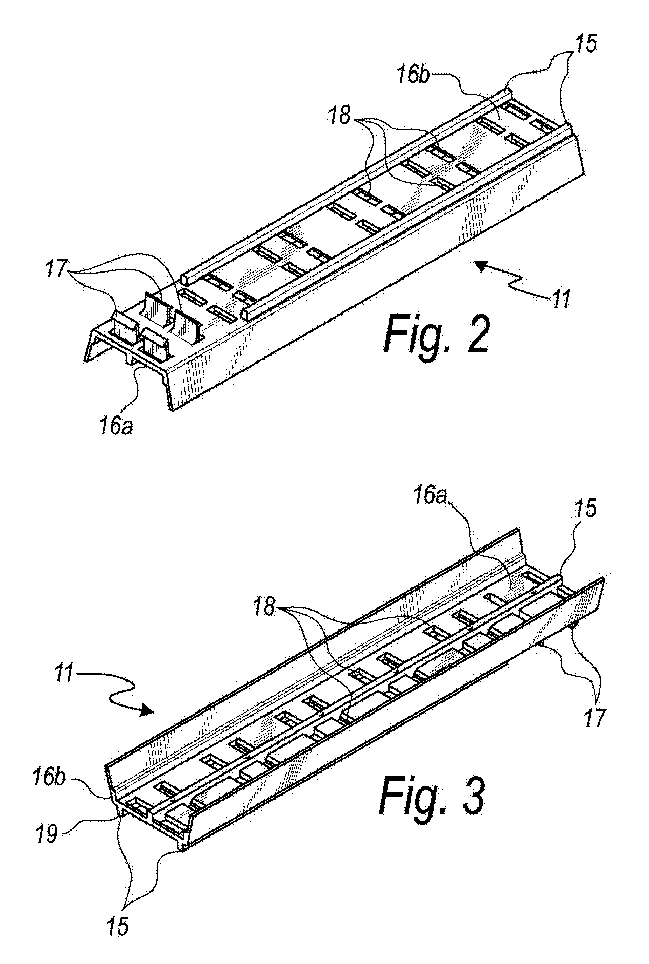

- Figur 2: die Antirutsch-Stützvorrichtung gemäß der Erfindung in perspektivischer Ansicht zeigt;
- Figur 3: die Antirutsch-Stützvorrichtung gemäß der Erfindung in einer weiteren perspektivischen Ansicht zeigt;

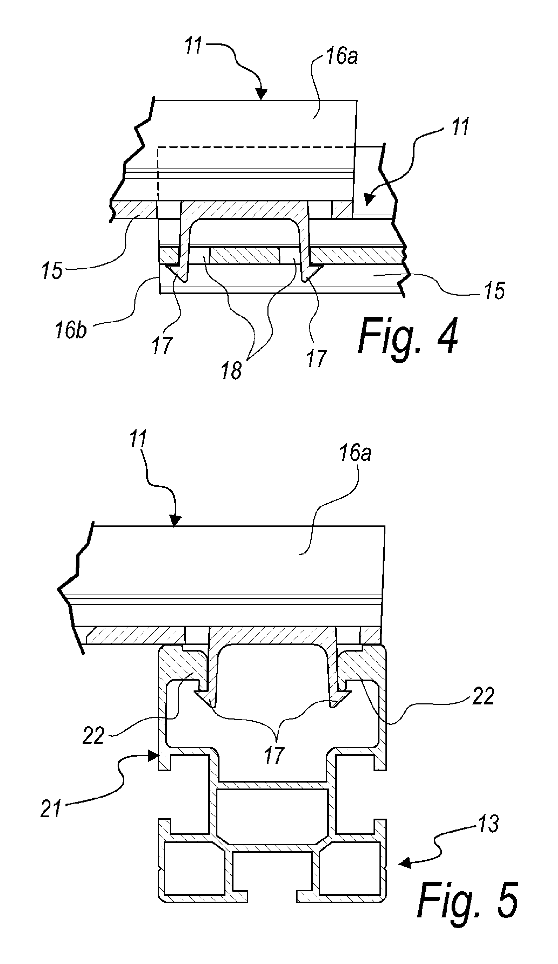

- Figur 4: ein vergrößertes und geschnittenes Detail der Antirutsch-Stützvorrichtung gemäß der Erfindung zeigt; und
- Figur 5: ein weiteres vergrößertes und geschnittenes Detail der Antirutsch-Stützvorrichtung gemäß der Erfindung zeigt.

Die in den genannten Figuren gezeigte Antirutsch-Stützvorrichtung 10 für Sonnenkollektorplatten umfasst mindestens ein längliches Modul 11. Das Modul 11 besteht vorzugsweise aus Kunststoff und ist so geformt, dass es biege- und torsionsbeständig ist, und mit Verbindungsmitteln 12 zum festen Verbinden mit weiteren Modulen 11 und mit Halteelementen 13 zum Halten einer Sonnenkollektorplatte 14 ausgestattet ist.

Beim Gebrauch ist das Modul 11 der Antirutsch-Stützvorrichtung 10, direkt oder über mindestens ein weiteres Modul 11, fest mit den Halteelementen 13 verbunden und stößt gegen die Sonnenkollektorplatte 14, um zu verhindern, dass diese von den Halteelementen 13 rutscht.

Vorzugsweise hat das Modul 11 einen im Wesentlichen U-förmigen Querschnitt mit Versteifungsrippen 15.

Insbesondere umfassen die Verbindungsmittel 12 zum festen Verbinden vorzugsweise
- hakenförmige Fortsätze 17 an einem ersten Ende 16a des Moduls 11 und
- Einführöffnungen 18 für die Fortsätze 17 am zweiten Ende 16b des Moduls 11 zum festen Verbinden zweier aufeinander folgender Module 11.

Ferner hat das Modul 11 zweckmäßigerweise eine Vielzahl von Einführöffnungen 18, die über seine Länge verteilt sind.

Auf diese Weise ist die Ausdehnung der Kombination eines ersten Moduls 11a und eines zweiten Moduls 11b in Längsrichtung veränderbar. Das erste Modul 11a ist beim Gebrauch durch Einführen der Fortsätze 17 in die für die gewünschte Ausdehnung vorgewählten Einführöffnungen 18 fest mit dem zweiten Modul 11b verbunden.

Zudem hat das Modul 11 zweckmäßigerweise an einem zweiten Ende 16b einen Anschlag 19 für einen Rahmen 20 der Sonnenkollektorplatte 14.

Beim Gebrauch stößt das zweite Ende 16b des Moduls 11 gegen den Rahmen 20, um die Sonnenkollektorplatte 14 zu stützen, während es am ersten Ende 16a über die Ansätze 17, die sich dort einklemmen, fest mit den Halteelementen 13 verbunden ist.

Alternativ hat die Antirutsch-Stützvorrichtung 10 je nach Abstand zwischen den Halteelementen 13 und dem Rahmen 20 ein Modul oder mehrere Module 11, die wie erwähnt fest miteinander verbunden sind und von denen das Endmodul 11 fest mit den Halteelementen 13 verbunden ist.

Die Halteelemente 13 umfassen zweckmäßigerweise ein Profil 21 zum Stützen der Sonnenkollektorplatte 14, das mit Rastschenkeln 22 versehen ist, die zum verbindenden Aufnehmen der Ansätze 17 geeignet sind.

Die Gebrauchsweise einer erfindungsgemäßen Antirutsch-Stützvorrichtung 10 ist folgende:

Der Installateur befestigt das Profil 21, beispielsweise mit Bügeln 23, an dem Dach oder einem anderen Installationsort für die Sonnenkollektorplatte 14, wobei er die Lageneigung für die Sonnenkollektorplatte definiert.

Danach verbindet er ein Modul 11 fest mit dem Profil 21, indem er die Fortsätze 17 mit den Rastschenkeln 22 in Eingriff bringt, so dass das Modul 11 von dem Profil 21 aus bezüglich der definierten Neigung aufwärts verläuft.

Falls die Ausdehnungslänge des Moduls 11 von dem Profil 21 zum Befestigen der Sonnenkollektorplatte 14 ausreicht, wird diese auf die so erhaltene Antirutsch-Stützvorrichtung 10 gehängt.

So wird die Sonnenkollektorplatte 14 von dem an dem Profil 21 befestigten Modul 11 gehalten, das mit dem Anschlag 19 an den Rahmen 20 stößt, um ein Abrutschen der Sonnenkollektorplatte 14 von dem Profil 21, das sie trägt, zu verhindern.

Alternativ wird ein erstes Modul 11a fest an einem mit dem Profil 21 verbundenen zweiten Modul 11b befestigt, wodurch die Ausdehnung der Kombination des ersten Moduls 11a mit dem zweiten Modul 11b in Längsrichtung wie vorstehend beschrieben eingestellt wird, um den gewünschten Abstand des Anschlags 19 der Antirutsch-Stützvorrichtung 10 von dem Profil 21 zu erhalten.

Somit wird die Sonnenkollektorplatte 14 von dem ersten Modul 11a gehalten, das mit dem Anschlag 19 an den Rahmen 20 stößt und an dem zweiten Modul 11b befestigt ist, das wiederum an dem Profil 21 befestigt ist.

Bei Bedarf können mehr als zwei Module 11 hintereinander fest miteinander verbunden werden, wodurch die Ausdehnung der Kombination der Module 11 in Längsrichtung verändert wird, um den gewünschten Abstand des Anschlags 19 der Antirutsch-Stützvorrichtung 10 von dem Profil 21 zu erhalten.

Die so gehaltene Sonnenkollektorplatte 14 kann folglich an den Halteelementen 13 befestigt werden, ohne dass sie weiter festgehalten werden muss, damit sie nicht von den Halteelementen 13 abrutscht.

In der Praxis hat sich gezeigt, dass die Erfindung die Aufgabe erfüllt und die gesteckten Ziele erreicht, da eine Antirutsch-Stützvorrichtung 10 bereitgestellt wird, die ein wirksames Festhalten der Sonnenkollektorplatte 14 auf ihrem Träger, hier dem Profil 21, mindestens bis zu deren Befestigen ermöglicht.

Zudem ermöglicht eine erfindungsgemäße Antirutsch-Stützvorrichtung 10 ein bequemes Einstellen der Halteposition der Sonnenkollektorplatte 14 auf ihrem Träger, da die Module 11 in verschiedenen Positionen fest miteinander verbunden werden können, indem gewählt wird, in welche Einführöffnungen 18 eines Moduls 11 die Fortsätze 17 eines damit zu verbindenden Moduls 11 eingreifen sollen.

Ferner ermöglicht eine erfindungsgemäße Antirutsch-Stützvorrichtung 10 das einfache und schnelle Vorbereiten des Haltens der Sonnenkollektorplatte 14 in der Position auf ihrem Träger; das feste Verbinden zwischen dem Profil 21 und den Modulen 11 und zwischen den Modulen 11 erfolgt nämlich einfach und schnell, da es nur das einfache Einführen der hakenförmigen Fortsätze 17 in die entsprechenden Einführöffnungen 18 erfordert.

Zudem ist eine erfindungsgemäße Antirutsch-Stützvorrichtung 10 gegenüber den heute bekannten Lösungen, die mit Elementen aus rostfreiem Stahl realisiert sind, viel wirtschaftlicher zu realisieren, da sie aus Kunststoff gefertigt werden kann.

Die so konzipierte Erfindung kann zahlreiche Modifikationen und Variationen erfahren, die alle im Rahmen des Erfindungskonzepts liegen. Zudem können alle Details durch andere, technisch gleichwertige Elemente ersetzt werden.

In der Praxis sind die verwendeten Materialien sowie die Abmessungen und Formen je nach den Anforderungen und dem Stand der Technik frei wählbar.

### Bezugszeichenliste

### Antirutsch-Stützvorrichtung

- 10: Antirutsch-Stützvorrichtung
- 11: Modul
- 12: Verbindungsmittel
- 13: Halteelement
- 14: Sonnenkollektorplatte
- 15: Versteifungsrippe
- 16a: erstes Ende
- 16b: zweites Ende
- 17: Fortsatz
- 18: Einführöffnung
- 19: Anschlag
- 20: Rahmen
- 21: Profil
- 22: Rastschenkel
- 23: Bügel

## Patentansprüche

1. Antirutsch-Stützvorrichtung für Sonnenkollektorplatten und dergleichen, **dadurch gekennzeichnet, dass** sie mindestens ein längliches Modul (11) umfasst, das so geformt ist, dass es biege- und torsionsbeständig ist, und mit Verbindungsmitteln (12) zum festen Verbinden mit weiteren Modulen (11) dieser Art und mit Halteelementen (13) zum Halten einer Sonnenkollektorplatte (14) ausgestattet ist, wobei das Modul (11) der Antirutsch-Stützvorrichtung beim Gebrauch direkt oder über mindestens ein weiteres Modul (11) fest mit den Halteelementen (13) verbunden ist und gegen die Sonnenkollektorplatte (14) stößt, um zu verhindern, dass diese von den Halteelementen (13) rutscht.

2. Antirutsch-Stützvorrichtung gemäß Anspruch 1, **dadurch gekennzeichnet, dass** das Modul (11) einen im Wesentlichen U-förmigen Querschnitt mit Versteifungsrippen (15) hat.

3. Antirutsch-Stützvorrichtung gemäß Anspruch 1, **dadurch gekennzeichnet, dass** die Verbindungsmittel (12) zum festen Verbinden an einem ersten Ende (16a) des Moduls (11) hakenförmige Fortsätze (17) und mindestens an dem zweiten Ende (16b) des Moduls (11) Einführöffnungen (18) für die Fortsätze (17) zum festen Verbinden zweier aufeinander folgender Module (11a, 11b) umfassen.

4. Antirutsch-Stützvorrichtung gemäß Anspruch 3, **dadurch gekennzeichnet, dass** das erste Modul (11a) eine Vielzahl der Einführöffnungen (18) hat, die über seine Länge verteilt sind, zur Veränderung der Ausdehnung einer Kombination eines ersten Moduls (11a) und eines zweiten Moduls (11b), mit dem das erste Modul (11a) beim Gebrauch durch Einführen von hakenförmigen Fortsätzen (17) des zweiten Moduls (11b) in vorbestimmte Einführöffnungen (18) des ersten Moduls (11a) fest verbunden ist.

5. Antirutsch-Stützvorrichtung gemäß Anspruch 1, **dadurch gekennzeichnet, dass** das Modul (11) an dem zweiten Ende (16b) einen Anschlag (19) für einen Rahmen (20) der Sonnenkollektorplatte (14) aufweist, wobei das Modul (11) ein zweites Ende (16b) aufweist, das beim Gebrauch gegen den Rahmen (20) stößt, um die Sonnenkollektorplatte (14) zu halten, während es an dem ersten Ende (16a) fest mit den Halteelementen (13) oder, direkt oder über ein anderes Modul (11), mit zumindest einem weiteren Modul (11) verbunden ist, das fest mit den Halteelementen (13) verbunden ist.

6. Antirutsch-Stützvorrichtung gemäß Anspruch 1, **dadurch gekennzeichnet, dass** das Modul (11) aus Kunststoff besteht.
